# EUROPEAN PATENT APPLICATION

(11) **EP 2 458 777 A1**
(43) Date of publication of application: **30.05.2012**
(21) Application number: 10193081.6
(22) Date of filing: 30.11.2010
(51) Int. Cl.: H04L 9/08

(54) **Deriving one or more cryptographic keys of a sequence of keys**

(71) Applicant: Irdeto B.V., 2132 LS Hoofddorp (NL)
(72) Inventor: Wajs, Andrew Augustine, 2132 LS, Hoofddorp (NL)
(74) Representative: Tucker, Nigel P.

(57) **Abstract**

The invention provides a method for deriving one or more cryptographic keys of a sequence of keys. The method includes receiving information indicative of a calculation key and applying a one-way function to the calculation key to derive a target key. Deriving the target key from the calculation key, as opposed to deriving the target key from the current key, allows reducing the number of one-way function iterations necessary for obtaining the target key. As a result, a delay in the decryption of the encrypted content may be reduced, relative to the prior art.

## Description

### FIELD OF THE INVENTION

The present invention relates to a method and systems for deriving past cryptographic keys necessary for decrypting encrypted content.

### BACKGROUND

Conditional access systems are well known and widely used in conjunction with currently available pay television systems. At present, such systems are based on the transmission of services encrypted with control words (also referred to as content encryption keys or service encryption keys) that are received by subscribers having a set-top box and a smartcard for each subscription package. Typically these services are transmitted by a head-end system in a broadcast stream. Implementations are known wherein set-top box functionality is integrated into a device like a television, a personal video recorder, a mobile phone, a smart phone or a computer appliance. Smartcard implementations are known wherein the smartcard is a separate card that is manually inserted into the set-top box before operation or a surface mounted device integrated into the set-top box. Software implemented smartcards are known that run as a software module in the set-top box. The smartcard for a subscription package from a particular service provider allows the encrypted services within the package to be decrypted and viewed or listened. The broadcast stream may further contain entitlement management messages (EMMs), also referred to as key management messages (KMMs), and entitlement control messages (ECMs), which are necessary for the smartcard to decrypt the service. The control word is the primary security mechanism for protecting the service data and changes relatively frequently. ECMs are used to carry the control word in encrypted form, and are therefore sent relatively frequently. EMMs are used to convey the secret keys (also referred to as product keys, authorization keys, or session keys) used to decrypt the ECMs to extract the control word, to decrypt other data related to the addition or removal of viewing/usage rights, and/or to decrypt other user-specific data. As such, there are different kinds of EMMs, which are sent with varying degrees of frequency, but invariably somewhat slower or much slower than the frequency at which ECMs are sent.

Sometimes a subscriber may wish to record particular content for subsequent viewing or listening. Typically, this is enabled by recording content data along with corresponding ECMs containing control words for decrypting the content. One problem with such an approach is that as the product keys change, the smartcard may loose the ability to decrypt the recorded ECMs to extract the control words.

US 6,363,146 describes a method for deriving past keys. The method includes using a one-way function to relate an ordered sequence of keys to each other where, based on the current key, the key immediately preceding the current key may be derived, which could then be used to derive the next immediately preceding key in the sequence, and so on. By calculating the keys in this manner, a conditional access unit is able to derive previous keys necessary for decrypting recorded encrypted content.

One problem with such an approach is that if the product key values change frequently, the number of one-way function iterations can become quite significant. This introduces a delay in the ECM decryption which is not desirable.

### SUMMARY OF THE INVENTION

It is an object of the invention to provide an improved method and system for deriving past keys necessary for decrypting encrypted content.

According to one aspect of the invention, a method is proposed for deriving one or more cryptographic keys of a sequence of keys as defined in claim 1.

Deriving the one or more cryptographic keys from the calculation key, as opposed to deriving the one or more cryptographic keys from a current key, allows reducing the number of one-way function iterations necessary for obtaining one or more cryptographic keys. As a result, a delay in the decryption of the encrypted content may be reduced, relative to the prior art. By applying two or more one way functions different previous keys can be directly obtained from a calculation key.

As used herein, the term "one-way function" refers to a function for which it is practically infeasible to obtain an inverse function. Using such a function, a sequence of values may be generated where an element of the sequence having a higher sequence index may be used to derive elements of the sequence having lower sequence indices.

It should be noted that in the present application the terms "encrypting" and "scrambling" are taken to denote identical operations. Similarly, the terms "decrypting" and "descrambling" are also taken to denote identical operations.

The embodiment of claim 2 advantageously enables keys to be directly obtained at different previous positions in the sequence of keys following a hierarchical calculation tree.

The embodiment of claim 3 advantageously enables the use of level specific one-way functions, which make it impossible to calculate the entire sequence of keys with only iterations of one of these functions, which provides further security relative to the prior art.

The embodiment of claim 4 advantageously enables defining the number of intermediate keys by using key index distances and defines how the levels of keys may be hierarchically ordered.

The embodiment of claim 5 advantageously enables receiving a current key (P_{N-5}). As used herein, the term "current key" refers to the key used to decrypt live encrypted content (i.e., the most recent version of the key sequence).

In one embodiment, the current key and the information indicative of the calculation key may be received in a single message. In other embodiments, the current key and the information indicative of the calculation key may be received in two separate messages.

The embodiment of claim 6 advantageously enables a single target key to be obtained. As used herein, the term "target key" refers to a cryptographic key that is needed to decrypt previously recorded encrypted content and the term "calculation key" refers to the latest of the previously used keys that can be used to calculate the target key.

The target key and the calculation key may be separated by at least one intermediate key in the sequence of keys. As used herein, the term "intermediate key" refers to a key in the sequence of keys which is between the calculation key and the target key. Deriving the cryptographic key from the calculation key by a single application of a one-way function (i.e. without deriving the intermediate key separating the target key and the calculation key) allows further reducing the number of one-way function iterations necessary for obtaining the target key.

The embodiment of claim 7 advantageously enables a headend system to generate the sequence of keys.

With the above-described definitions of the current key, the calculation key, the target key, and the intermediate key, the current key may be said to have the highest sequence index, the calculation key may be said to have a sequence index equal to or lower than the current key, and the intermediate key may be said to have a sequence index lower than the sequence index of the calculation key but greater than the sequence index of the target key.

In various embodiments, the sequence of keys could comprise product keys or control words. In such embodiments, the message containing information indicative of the calculation key could be an EMM or an ECM, respectively.

According to other aspects of the invention, a conditional access system, a content decryption device, a secure module (smartcard), and a computer program for deriving target keys are disclosed.

The content decryption device may e.g. be a set-top box or a conditional access module implemented in a device, such as a set-top box or a television.

It should also be appreciated that the secure module can be a physical device, e.g. provided as a tamper-proof or tamper-evident device with an integrated circuit, such as a smart card. However, a secure module can also be a software module within the content decryption device, made relatively tamper proof, for example, by code obfuscation or other such techniques. The secure module typically has a higher level of security than the content decryption device, due to protective features additional to those of the device. The key provider in the content decryption device may use similar forms of protection as the secure module.

According to yet another aspect of the invention, a head-end system for generating a sequence of keys is disclosed. The sequence includes at least the target key and the calculation key and typically include one or more intermediate keys between the target key and the calculation key.

Hereinafter, embodiments of the invention will be described in further detail. It should be appreciated, however, that these embodiments may not be construed as limiting the scope of protection for the present invention.

### BRIEF DESCRIPTION OF THE DRAWINGS

Aspects of the invention will be explained in greater detail by reference to exemplary embodiments shown in the drawings, in which:
Fig.1 shows a schematic illustration of a conditional access system according to one exemplary embodiment of the present invention;
Figs. 2A and 2B depict, respectively, key layer diagrams of a prior art system and a system according to an exemplary embodiment of the present invention;
Fig.3 illustrates application of one-way functions to derive target keys according to one exemplary embodiment of the present invention;
Fig.4 illustrates application of one-way functions to derive target keys according to another exemplary embodiment of the present invention;
Fig.5 illustrates application of one-way functions to derive target keys according to another exemplary embodiment of the present invention;
Fig.6 illustrates application of one-way functions to derive target keys according to another exemplary embodiment of the present invention; and
Fig.7 shows a flow chart of steps of a method of an exemplary embodiment of the invention.

### DETAILED DESCRIPTION OF THE DRAWINGS

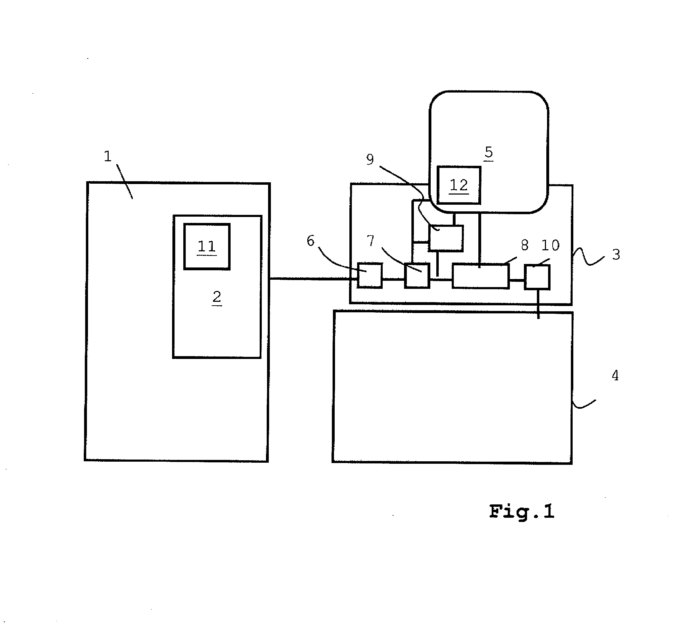

Fig. 1 provides a schematic illustration of a conditional access system including a head-end system 1 and a content decryption system 3, e.g. a set-top box, according to an embodiment of the invention.

The head-end system 1 includes an encryption system 2 and a sequence generator 11. The head-end system 1 may be in accordance with the Simulcrypt standard for Digital Video Broadcasting. A head-end system is but one example of a system for providing scrambled data. The head-end system 1 shown in Fig. 1 provides a stream of data packets that is broadcast. Whereas the head-end system 1 is typically employed to broadcast transport stream packets in accordance with the MPEG-2 systems standards (International Standard ISO/IEC 13818-1) via a terrestrial, satellite or cable broadcast system, the methods outlined herein may also be employed to provide scrambled data in Internet Protocol (IP) packets for broadcasting, multicasting or point-to-point communication to receivers in a suitable network.

"Digital Video Broadcasting (DVB); Support for use of scrambling and Conditional Access (CA) with digital broadcasting systems", ETSI Technical Report ETR 289, October 1996 is a technical report that addresses the addition of Conditional Access (CA) elements to international standard ISO/IEC 13818-1 (MPEG-2). The scrambling algorithm operates on the payload of a Transport Stream (TS) packet in the case of TS-level scrambling. A structuring of PES packets is used to implement PES-level scrambling with the same scrambling algorithm. The Program Specific Information (PSI) part of the MPEG-2 specification contains syntactical elements defining where to find CA system information. The CA table and the Program Map Table (PMT) contain CA descriptors which have a CA_PID field to reference PID values of TS packets that are used to carry CA information such as EMMs (Entitlement Management Messages) and ECMs (Entitlement Control Messages). For applications that scramble MPEG-2 Sections, the scrambling of Sections is at the TS level and signalled by scrambling control field bits. The MPEG-2 Systems specification contains a scrambling control field of two bits, both in the TS packets header and the in the PES (Program Elementary Stream) header. The first scrambling control bit indicates whether or not the payload is scrambled. The second bit indicates the use of Even or Odd Key.

As further illustrated in Fig. 1, the receiving side of the conditional access system comprises the content decryption device 3 in communicative connection with a content rendering device 4, such as a television. A secure module 5, hereinafter also referred to as smartcard 5, is communicatively connected to the content decryption device 3.

Content decryption device 3 comprises a signal input 6 for receiving the broadcast signal from the head-end 1. The broadcast signal, comprising encrypted content data and conditional access data, is first demodulated and digitized. Signal input 6 is connected to a demultiplexer 7 configured for separating the signal into conditional access data (ECMs, EMMs) and encrypted content data (i.e., encrypted programs). The demultiplexer 7 transfers at least a part of the conditional access data (ECMs and EMMs) to the smartcard 5. The encrypted content data is fed to a hardware decrypter 8 (or a software decrypter with hardware acceleration) that, upon receiving the correct decryption keys (control words CWs) from the smartcard 5, may provide decrypted content data to the content rendering device 4, possibly after processing in a decompression means 10.

When a subscriber wishes to record a program or a portion thereof and store it for later viewing, the demultiplexer 7 is configured to transfer encrypted content data as well as at least a part of the conditional access data (ECMs) to a memory 9. When a subscriber wishes to replay the recorded program, at least a part of the conditional access data associated with the program is transferred from the memory 9 to a derivation unit 12 of the smartcard 5 configured for deriving the decryption keys used to encrypt the program.

It should be noted that one or more of the above means may be installed in the content rendering device 4, e.g. the signal input 6 and the decompression means 10. Content decryption device 3 may also be part of the content rendering device 4. Furthermore, one of more of the above means may be installed in separate devices, e.g. at least a part of the memory 9 may be a memory unit external to the content decryption device 3. Alternatively, at least a part of the memory 9 may reside within the smartcard 5.

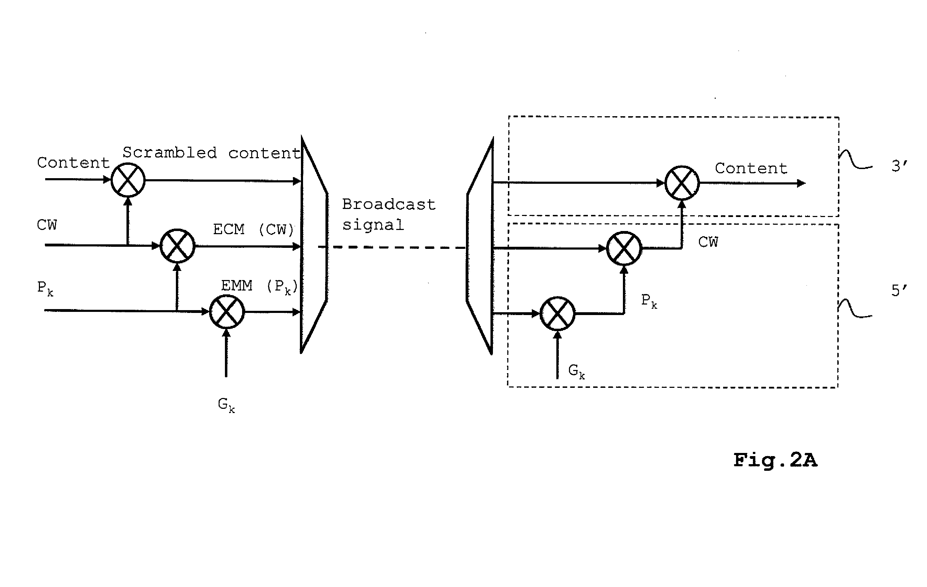

A more detailed embodiment according to the invention will now be discussed with reference to Figs. 2A-4.

Fig. 2A depicts a key layer stack, known as such, wherein content data is scrambled using control words CW. The control words CW are included in the broadcast signal by means of ECMs, encrypted under a current product key Pₖ. Entitlement management messages, encrypted under a group key Gₖ, comprise the current product key Pₖ and entitlements indicating authorisations of a subscriber assigned to smartcard 5. At the receiving side, encrypted content is received and the ECMs are transferred to the smartcard 5. In the smartcard 5, it is verified whether the subscriber is authorised to decrypt the encrypted content using the entitlements stored on the smart card. If so, the product key Pₖ is used to decrypt the ECMs to obtain the CWs. The CWs are then transferred to a content decryption device 3' where the encrypted content data is decrypted using the CWs. If the control words change, as happens frequently, processing power of the smartcard 5' is required to provided the new CWs to the content decryption device 3'.

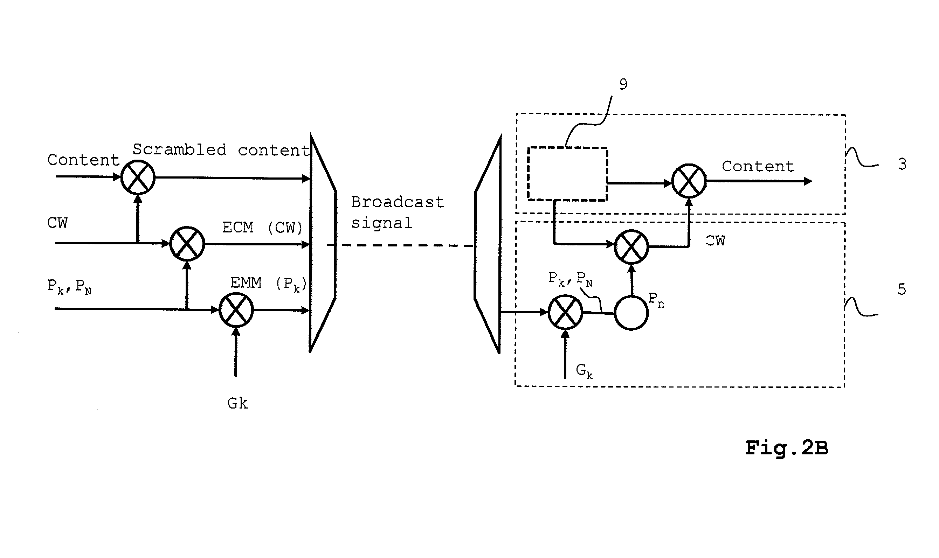

Fig. 2B illustrates a key layer stack according to an embodiment of the invention. Again, as in the prior art key layer stack, the content data is scrambled using control words CWs which, in turn, are included in the broadcast signal by means of ECMs. Also similar to the prior art key layer stack, EMMs, encrypted under a group key Gₖ, comprise a current product key Pₖ and entitlements indicating authorisations of a subscriber assigned to smartcard 5. Unlike the prior art key layer stack, entitlement management messages according to an embodiment of the present invention also include a calculation key (C_{K}) or information that allows deriving the calculation key. As described below, based on either the current key or the calculation key, the smartcard 5 is able to derive all other previous product keys Pₙ for decrypting recorded ECMs associated with the stored content.

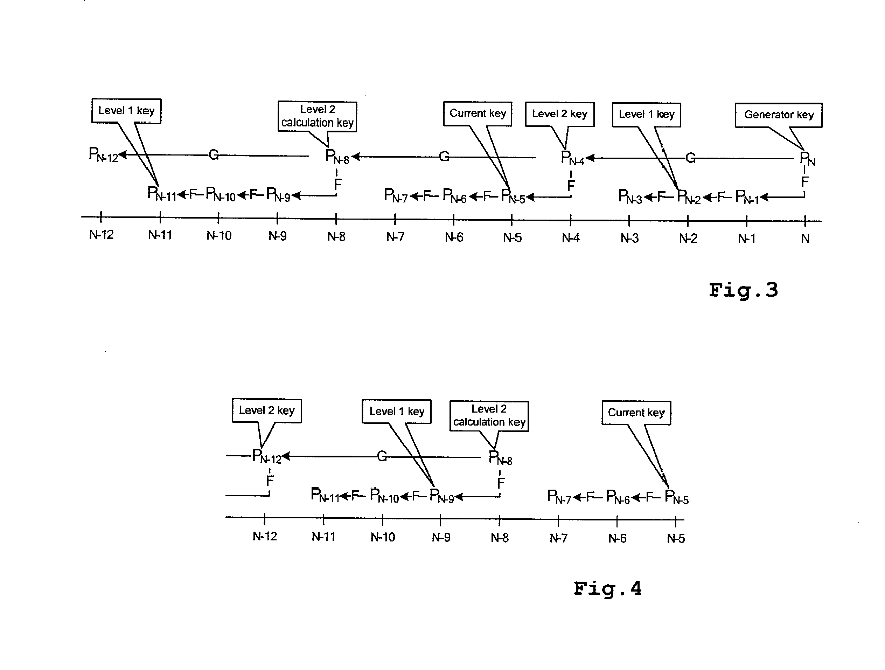

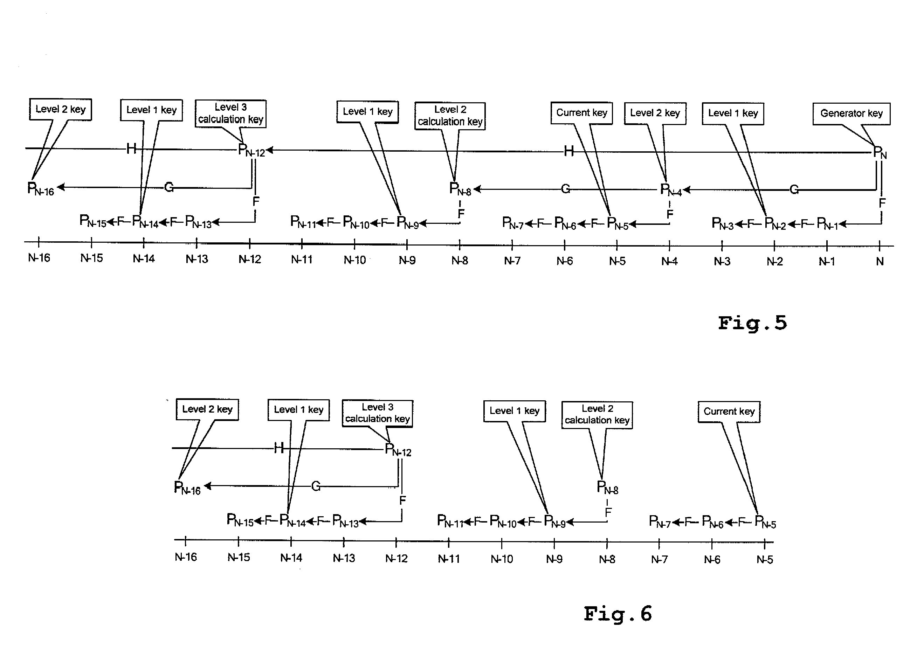

To that end, the sequence generation module 11 of the encryption unit 2 is configured to generate a sequence of product keys using one-way functions, such as for example functions F and G as illustrated in Fig.3 or functions F, G and H as illustrated in Fig.5, and the derivation unit 12 of the smartcard 5 is configured to generate a sub set of the sequence of product keys using one-way functions, such as for example functions F and G as illustrated in Fig.4 or functions F, G and H as illustrated in Fig.6.

As shown in Fig.3, a sequence of product keys Pₙ includes keys P_{N}, P_{N-1}, P_{N-2}, P_{N-3}, P_{N-4}, P_{N-5}, and so on. The key P_{N} is the generator key that the sequence generation module 11 uses as initial key to generate the entire sequence of keys. The key P_{N-1} is the product key immediately preceding the key P_{N}, the key P_{N-2} is the product key immediately preceding the key P_{N-1} and so on. In the illustrated embodiment, the sequence generation module 11 may use a one-way function G to generate keys P_{N-4}, P_{N-8} and P_{N-12} as follows: the key P_{N-4} is generated by applying the function G to the generator key P_{N}, the key P_{N-8} is generated by applying the function G to the key P_{N-4}, and the key P_{N-12} is generated by applying the function G to the key P_{N-8}. The sequence generation module 11 may use another one-way function, shown in Fig.3 as function F, to generate intermediate keys P_{N-1}, **P_{N-2},** P_{N}-₃, P_{N}-₅, P_{N}-₆, P_{N}-₇, P_{N}-₉, P_{N}-₁₀ and P_{N}-₁₁. Similar to the use of function G, function F is used in such a manner that, based on the generator key P_{N}, the key P_{N}-₁ may be generated; based on the key P_{N}-₁, the key P_{N}-₂ may be generated; and, based on the key P_{N}-₂, the key P_{N}-₃ may be generated. Similarly, function F is used in such a manner that, based on the key P_{N}-₄, the key P_{N}-₅ may be generated; based on the key P_{N}-₅, the key P_{N}-₆ may be generated; and, based on the key P_{N}-₆, the key P_{N}-₇ may be generated. Further, function F is used in such a manner that, based on the key P_{N}-₈, the key P_{N}-₉ may be generated; based on the key P_{N}-₉, the key P_{N}-₁₀ may be generated; and, based on the key P_{N}-₁₀, the key P_{N-11} may be generated. Thus, the sequence generation module 11 may use function F to derive only the limited number of keys (namely, the intermediate keys). For example, function F cannot be used to derive the keys P_{N}-₄, P_{N}-₈ and P_{N}-₁₂.

Function F is also called a level 1 function and the intermediate keys P_{N}-₁, P_{N}-₂, P_{N}-₃, P_{N}-₅, P_{N}-₆, P_{N}-₇, P_{N}-₉, P_{N-10} and P_{N}-₁₁ are also called level 1 keys. Function G is also called a level 2 function and the keys P_{N}, P_{N}-₄, P_{N}-₈ and P_{N}-₁₂ are also called level 2 keys. In the example of Fig.3 P_{N}-₅ is the current key that is used to encrypt the current broadcast stream and P_{N}-₈ is the level 2 calculation key that was last used before the current key and which can be used in the smartcard to calculate a subset of the key sequence.

A sequence may be realised by the sequence generation module 11 with the following construction rules, wherein index n is used to identify a sequence index of a particular product key in the sequence:
1) Pₙ = G(Pₙ₋₄) for n mod 4 = 0 and n∈□⁻
2) Pₙ = F(Pₙ₋₁) for all other n∈□⁻
3) P_{N} = random value.

The above rules allow generating a sequence of product keys by, starting with the random value P_{N} (the key with the highest sequence index of this sequence and the initial key used to generate the entire sequence of keys in the head-end system), first calculating every fourth product key value using a one-way function G and from each of these values calculating the associated intermediate values with the one-way function F. The arrows from right to left in Fig.3 indicate that functions G and F are such that a value with a lower sequence index (e.g. P_{N}-₈), may be derived based on the value with a higher sequence index (e.g. P_{N}-₄), but not the other way around.

Once such a sequence of product keys has been constructed, content can be encrypted under associated product keys, where product keys change one by one starting from the product key with the lowest sequence index and ending with the product key with the highest sequence index. The last key that may be used to encrypt content is the generator key P_{N}.

At the receiving side, encrypted content is received and the ECMs containing the control words for decrypting the encrypted content data are transferred to the smartcard 5, using demultiplexer 7. When a subscriber wishes to record a program for later viewing/listening, the encrypted program and the associated ECMs are transferred to the memory 9.

When a subscriber wishes to replay the recorded program, the associated ECMs are transferred from the memory 9 to the derivation unit 12 of the smartcard 5. The smartcard 5 further continues receiving broadcast EMMs containing the current key and the higher level calculation key that was last used before the current key and which can be used in the smartcard to calculate a subset of the key sequence.

In the example of Fig.4, the subset of the key sequence to be generated in the smartcard includes keys P_{N}-₅, P_{N}-₆, P_{N}-₇, P_{N}-₈, P_{N}-₉, and so on. The key P_{N}-₅ is the current key and the key P_{N}-₈ is the level 2 calculation key, both received in an EMM. In the illustrated embodiment, the derivation unit 12 may use a one-way function G to generate key P_{N}-₁₂ as follows: the key P_{N}-₁₂ is generated by applying the function G to the level 2 calculation key P_{N}-₈. The derivation unit 12 may use another one-way function, shown in Fig.3 as function F, to generate intermediate keys P_{N}-₆, P_{N}-₇, P_{N}-₉, P_{N-10} and **P_{N}-₁₁.**

As in the example of Fig.3, in Fig.4 function F is also called a level 1 function and the keys P_{N}-₅, P_{N}-₆, P_{N}-₇, P_{N}-₉, P_{N-10} and **P_{N}-₁₁** are also called level 1 keys. Function G is also called a level 2 function and the keys P_{N}-₈ and P_{N}-₁₂ are also called level 2 keys.

A subset of the key sequence may be realised by the derivation unit 12 with the following construction rules, wherein index n is used to identify a sequence index of a particular product key in the sequence:
1) Pₙ = G(Pₙ-₄) for n mod 4 = 0 and n∈□⁻
2) Pₙ = F(Pₙ₋₁) for all other n∈□⁻

The above rules allow generating a subset of the key sequence of product keys by, starting with a current key, such as P_{N}-₅ in the example of Fig.4, calculating the subsequent intermediate key values (i.e. first level keys) with the one-way function F. From the level 2 calculation key the subsequent intermediate key values (i.e. first level keys) following the level 2 calculation key may be calculated with the one-way function F and the next second level key may be calculated using the one-way function G.

As in Fig.3, in Fig.4 the arrows from right to left indicate that functions G and F are such that a value with a lower sequence index (e.g. P_{N}-₁₂), may be derived based on the value with a higher sequence index (e.g. P_{N}-₈), but not the other way around.

Continuing with the product key sequence illustrated in Fig.3 and Fig.4, consider that the sequence index of the current product key is 415 (i.e., k=415 or N-5=415), the sequence index of the calculation key (i.e., the key from which other keys may be derived using the function G) is 412 (i.e., N-8=412) and subscriber wishes to view recorded program associated with a product key with a sequence index 408 (i.e. the target key to be derived is the key with sequence index 408). The derivation module 12 is first configured to determine the key index distance between the calculation key and the target key (which, in this example, is equal to 4, i.e. index 412 minus index 408). The key index of the calculation key itself, the key index difference between the current key and the calculation key, or other information that would allow the derivation module 12 to determine the key index of the calculation key may be provided to the smartcard 5 in a message containing the calculation key itself or in a separate message. The derivation module 12 is also configured to determine by which rules the target key may be calculated. To that end, the derivation module 12 may e.g. have access to the construction rules used in constructing the sequence of keys, such as the rules described above.

The derivation module 12 may then apply appropriate functions to derive the target key. For the example above, the derivation module 12 would apply a one-way function G to the received product key P₄₁₂ to derive a key P₄₀₈. The key P₄₀₈ may then be used to decrypt the recorded ECMs to produce the CWs. The CWs may then be used again for decrypting the recorded program in the decrypter 8.

Continuing the example above, consider that the subscriber also (or alternatively) wishes to view recorded program associated with a product key with a sequence index 406 (i.e. the index of the second target key is equal to 406). In such an example, having determined the key index distance between the calculation key and the second target key and having determined by which rules the second target key may be calculated, the derivation module 12 is configured to first apply a one-way function G to the received product key P₄₁₂ to derive a key P₄₀₈, then apply the one-way function F to the derived key P₄₀₈ to derive a key P₄₀₇, and finally apply the one-way function F to the derived key P₄₀₇ to derive the second target key P₄₀₆. The key P₄₀₆ may then be used to decrypt the recorded ECMs to produce the CWs. The CWs may then be used again for decrypting the recorded program in the decrypter 8.

Compared to a linear calculation of the product keys according to the prior art method, it is particularly advantageous that the above-described approach allows reducing the number of function operations by, in the shown examples, a factor of 4 for reasonable differences in the indexes of the current key and the target key required to decrypt the ECMs included in the stored content. This is a result of providing the additional product key, i.e. the calculation key P_{N}-₈, in messages from the encryption system 2 from which all other product keys could be derived. Persons skilled in the art will recognize that the construction rules for generating an appropriate sequence of keys can be modified to enable optimal performance for the typical lifetimes of stored content. This solution allows maintaining adequate security for the recorded content without demanding considerable computing resources from the content encryption device 3 and/or the smartcard 5.

In an alternative embodiment, the EMMs from the encryption system 2 may include not the calculation key itself, but the information from which the calculation key may be generated at the receiving side of the conditional access system. Having generated the calculation key, the derivation unit 12 would then proceed as described above to derive the target key.

While Fig. 3 illustrates using a one-way function G for calculating keys having a key index distance of 4 keys, in other embodiments, other key index distance values may be selected. Using a fixed distance between calculation keys allows simple construction of the key sequence and simplifies the calculations for the target keys. However, in other embodiments, the key index distance may be variable in order to e.g. enable more efficient calculation of past keys in a certain time window.

In the examples of Fig.3 and Fig.4 two levels of keys are shown, i.e. level 1 and level 2 keys. In further embodiments, it also is possible to add any number of key levels to the construction rules, wherein each level uses a particular function for the generation of keys in that level. One such embodiment with three levels is shown in Fig.5 and Fig.6 for a headend system and a smartcard, respectively. As in the example of Fig.3, in Fig.5 function F is also called a level 1 function and the keys P_{N-1}, P_{N-2}, P_{N-3}, P_{N-5}, P_{N-6}, P_{N-7}**,** P_{N-9}, P_{N-10}, P_{N-11}, P_{N-13}, P_{N-14} and P_{N-11} are also called level 1 keys. Function G is also called a level 2 function and the keys P_{N}-₄, P_{N}-₈ and P_{N-16} are also called level 2 keys. Function H is called a level 3 function and the keys P_{N} and P_{N}-₁₂ are called level 3 keys.

The sequence of product keys illustrated in Fig.5 is generated by the sequence generation module 11 by the following construction rules:
1) Pₙ = H (Pₙ-₁₂) for n mod 12 = 0 and n∈□⁻
2) Pₙ = G(Pₙ₋₄) for n mod 4 = 0 and n mod 12 # 0 and n∈□⁻
3) Pₙ = F(Pₙ₋₁) for all other n∈□⁻
4) P_{N} = random value.

All of the discussions for the embodiments including the use of G-function are applicable, with minor modifications, for the H-function here and, therefore, in the interests of brevity will not be repeated. In this example, the generator key from which all other keys in the sequence may be generated is the key P_{N}. The generator key P_{N} is used to generate all earlier product keys by application of an appropriate one-way function(s) H, G, and F. However, similar to the example illustrated in Fig. 3, each of the one-way functions is used to generate only a limited subset of keys in the sequence. For example, as illustrated in Fig. 5, keys P_{N}-₄, P_{N}-₈ and P_{N}-₁₆ are generated by applying the one-way function G, keys P_{N-1}, P_{N}-₂, and P_{N}-₃ are generated by applying the one-way function F, while key P_{N}-₁₂ is generated by applying the one-way function H. Thus, the key P_{N}-₁₂ cannot be derived based on the key P_{N} using only G or F functions, an H function must be used to derive that key.

Therefore, the derivation unit 12 now needs to receive in a message a calculation key from the second level, (in this case, the "G level") in addition to the calculation key from the third level (in this case, the "H level") from which all previous keys can be derived (or information that allows generation of these keys at the receiving side).

In the example of Fig.6, the subset of the key sequence to be generated in the smartcard includes keys P_{N}-₅, P_{N}-₆, P_{N}-₇, P_{N}-₈, P_{N}-₉, and so on. The key P_{N}-₅ is the current key, the key P_{N}-₈ is the level 2 calculation key and the key P_{N}-₁₂ is the level 3 calculation key, all three received in an EMM.

A subset of the key sequence may be realised by the derivation unit 12 with the following construction rules, wherein index n is used to identify a sequence index of a particular product key in the sequence:
1) Pₙ = H(Pₙ₋₁₂) for n mod 12 = 0 and n∈□⁻
2) Pₙ = G(Pₙ-₄) for n mod 4 = 0 and n mod 12 # 0 and n∈□⁻
3) Pₙ = F(Pₙ₋₁) for all other n∈□⁻

The above rules allow generating a subset of the key sequence of product keys by, starting with a current key, such as P_{N}-₅ in the example of Fig.4, calculating the subsequent intermediate key values (i.e. first level keys) with the one-way function F. From the level 2 calculation key the subsequent intermediate key values (i.e. first level keys) following the level 2 calculation key may be calculated with the one-way function F and the next second level key may be calculated using the one-way function G. From the level 3 calculation key the subsequent intermediate key values (i.e. first level keys) following the level 3 calculation key may be calculated with the one-way function F, the next second level key may be calculated using the one-way function G, and the next third level key may be calculated using the one-way function H.

The examples of Figs.3-6 show that a previous key of a sequence of keys can be calculated following a hierarchical calculation tree defined by the one or more one way functions F, G and H using one or more calculation keys as starting points. A key obtained by a one way function can be a calculation key for another one way function.

Note that the calculation of the relevant product key generally only occurs at the start of the playback of the recorded content. During the playback the product key is unlikely to change. Therefore, in some embodiments caching the calculated past product key may be beneficial.

In some cases, the product key may have been updated during the recording, so it may also be beneficial to cache a more recent product key in addition to the actual product key used in the ECM. When the smart card detects that the playback of recorded content has ended, the cached product keys can be removed from the cache.

While the embodiments described above refer to deriving product keys using the reverse chaining shortcut, similar approach could be applied to a sequence of control words used to encrypt and decrypt content data. To that end, the encryption system 2 would transmit messages to the content decryption device that would contain the control word from which all previous control words could be derived. This would enable a playback with the smart card having to decrypt only one ECM to obtain the starting value of the control word and then use that starting value to derive all previous control words. Such an approach could also enable a playback of recorded content even when the smart card is no longer present (assuming that all of the necessary control words are either derived ahead of time or the derivation unit 12 is located outside of the smartcard 5).

In yet another embodiment, the encryption system 2 could be configured to transmit both messages containing the product keys from which all previous product keys could be derived as well as messages containing control words from which all previous control words could be derived.

Persons skilled in the art will understand that the architecture described in Figs.1 and 2B in no way limits the scope of the present invention and that the techniques taught herein may be implemented on any properly configured conditional access system without departing the scope of the present invention. For example, while the invention is typically applied in a conditional access system wherein EMMs and ECMs are transmitted in an encrypted form, the invention is not limited to application in conditional access systems and may be used in any system where data is encrypted.

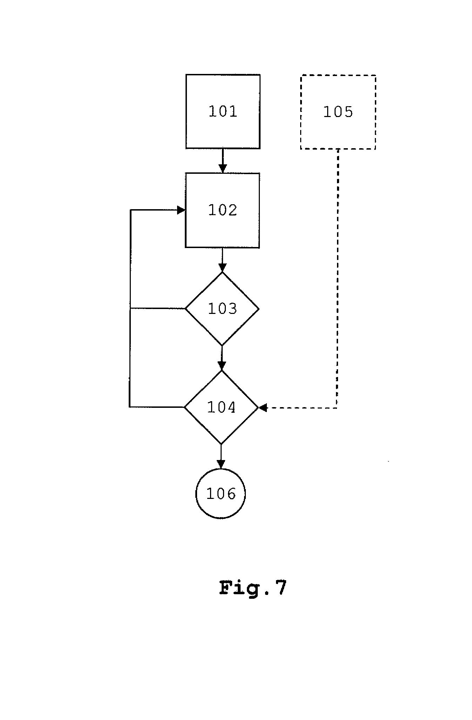

Fig.7 shows a sequence of steps of an exemplary embodiment of the invention. In step 101 information indicative of the calculation key, such as P_{N}, P_{N}-₈ or P_{N}-₁₂, is received. In step 105 optionally information indicative of the current key, such as P_{N}-₅, is received. At each level the level specific one-way function such as F, G or H is applied to the calculation key to obtain a level specific previous key, as indicated by step 102. In step 103 it is determined whether at a particular level a further previous key can be derived. If this is the case then step 102 is repeated using the last obtained previous key as input to the level specific one-way function. If this is not the case then in step 104 it is determined whether the previous key obtained by step 102 can be used as a starting point to derive a series of lower level keys. If this is the case, then step 102 is repeated using the previous key obtained by step 102 as input to the level specific one-way function. Step 104 may also be used to determine if the current key received in step 105 can be used to derive a previous key. If this is the case, then step 102 is repeated using the current key as input to the level specific one-way function. If no further keys are obtainable then the derivation procedure stops in step 106. If only a particular key with a target sequence index is to be obtained, then steps that do not contribute to the obtainment of the particular key may be skipped.

The person skilled in the art will understand that the scope of the present invention is in no way limited to the sequence of steps shown in Fig.7. For example, all keys at a particular level may be calculated first after which lower level keys are generated, or after one key at a particular level is calculated the lower level keys may be calculated before continuing with the calculation of a next key at the particular level, or any other order of calculating the keys may be used. Also particular steps may be performed in parallel to increase computational efficiency.

One embodiment of the invention may be implemented as a program product for use with a computer system. The program(s) of the program product define functions of the embodiments (including the methods described herein) and can be contained on a variety of non-transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state nonvolatile semiconductor memory) on which information is permanently stored; and (ii) writable storage media (e.g., flash memory, floppy disks within a diskette drive or hard-disk drive or any type of solid-state random-access semiconductor memory) on which alterable information is stored.

While the forgoing is directed to embodiments of the present invention, other and further embodiments of the invention may be devised without departing from the basic scope thereof. For example, aspects of the present invention may be implemented in hardware or software or in a combination of hardware and software. Therefore, the scope of the present invention is determined by the claims that follow.

## Claims

1. A method for deriving one or more cryptographic keys of a sequence of keys, the method comprising:
applying two or more one way functions (F,G,H) to one or more calculation keys (P_{N}, P_{N}-₈, P_{N}-₁₂) in the sequence of keys to directly obtain one or more previous keys in the sequence of keys.

2. The method according to claim 1, wherein a previous key obtained by one of the two or more one way functions (G,H) is a calculation key (P_{N}-₈, P_{N}-₁₂) for another of the two or more one way functions (F,G).

3. The method according to claim 2, wherein the sequence of keys comprises keys at two or more levels, wherein at each level a level specific one-way function (F,G,H) is applicable to derive the keys, the method comprising:
receiving information indicative of the calculation key (P_{N}, P_{N-8}, P_{N-12});
applying at each level the level specific one-way function (F,G,H) to the calculation key to obtain a level specific previous key;
applying the level specific one-way function (G,H) to the level specific previous key obtained at a level other than a lowest level to obtain a level specific previous key at a lower level; and
repeating applying at each level the level specific one-way function (F,G,H) to the last obtained level specific previous key until the level specific previous key is obtainable at a higher level.

4. The method according to claim 3, wherein the keys at each level have a level specific predefined key index distance indicating the number of intermediate keys, the key index distance at a lower level being smaller than the key index distance at a higher level and the key index distance at the lowest level being equal to one.

5. The method according to claim 3 or claim 4, further comprising receiving information indicative of a current key (P_{N}-₅) at the lowest level, wherein the current key is used as a level specific previous key at the lowest level.

6. The method according to any one of the claims 3-5, wherein each key in the sequence of keys has a unique sequence index, the method further comprising:
obtaining a target sequence index of a key to be obtained;
deriving a minimum set of level specific previous keys by which the key with the target sequence index is obtainable; and
skipping applying the level specific one-way function to keys that are not in the minimum set.

7. The method according to any on of the claims 1-4, wherein the calculation key (P_{N}) is an initial key for deriving the sequence of keys in a headend system.

8. A conditional access system comprising a head-end system and one or more secure modules, wherein the head-end system is configured to transmit:
information indicative of a calculation key (P_{N}-₈, P_{N}-₁₂); or
information indicative of a calculation key (P_{N}-₈, P_{N}-₁₂) and information indicative of a current key (P_{N}-₅),
and wherein the one or more secure modules are configured to perform the method according to any one of the claims 1-6 to derive one or more cryptographic keys of a sequence of keys.

9. A content decryption device comprising a secure module configured to perform the method according to any one of the claims 1-6 to derive one or more cryptographic keys of a sequence of keys.

10. A secure module configured to perform the method according to any one of the claims 1-6 to derive one or more cryptographic keys of a sequence of keys.

11. A head-end system configured to perform the method according to claim 7 to derive a sequence of keys.

12. A computer program including a set of instructions capable, when incorporated in a non-transitory machine readable medium, of causing a system having information processing capabilities to derive one or more cryptographic keys of a sequence of keys by performing the method according to any one of the claims 1-6.

13. A computer program including a set of instructions capable, when incorporated in a non-transitory machine readable medium, of causing a system having information processing capabilities to derive a sequence of keys by performing the method according to claim 7.
